Europäisches Patentamt

European Patent Office

Office européen des brevets

(11) Publication number: **0 100 099**
**B1**

## (12) EUROPEAN PATENT SPECIFICATION

(45) Date of publication of patent specification: **17.09.86**

(51) Int. Cl.⁴: **F 16 L 57/00,** F 16 L 58/06

(21) Application number: **83107395.2**

(22) Date of filing: **26.07.83**

(54) Buckle arrestor.

(30) Priority: **30.07.82 US 403377**

(43) Date of publication of application:
**08.02.84 Bulletin 84/06**

(45) Publication of the grant of the patent:
**17.09.86 Bulletin 86/38**

(84) Designated Contracting States:
**BE DE FR GB IT NL SE**

(56) References cited:
**DE-A-2 535 885**
**DE-A-3 208 452**
**GB-A-1 532 651**
**US-A-3 744 823**

(73) Proprietor: **SHELL OIL COMPANY**
**One Shell Plaza P.O. Box 2463**
**Houston Texas 77001 (US)**

(72) Inventor: **Muszynski, Larry C.**
**15115 Plaza Libre**
**Houston Texas 77083 (US)**

(74) Representative: **Munk, Ludwig, Dipl.-Ing.**
**Patentanwalt Prinzregentenstrasse 1**
**D-8900 Augsburg (DE)**

Courier Press, Leamington Spa, England.

## Description

The invention relates on one hand to an arrestor for reducing or eliminating propagating buckle failures, bursts etc. in underwater pipelines built up of covering means with high compressive and tensile strength and secured to at least a portion of the outside of the pipeline. On the other hand the invention relates to a method for making such an arrestor.

The GB—A—1 532 651 shows fracture-arresting means of the kind above consisting of a cylindrical sleeve having a greater diameter than the pipeline and defining an annular space therebetween which is filled with cement etc., that is a material having only compressive strength and not high tensile strength. In this known arrestor the material having compressive strength contacts the outside of the pipeline and the sleeve overlays this inner cover. The producing and assembling of an arrestor of this kind is very expensive and complicated. Further the outer sleeve is liable for corrosion. Furthermore the filling material, i.g. cement, doesn't bond well to the steel pipe and doesn't provide high hoop strength.

Starting from here it is the object of the present invention to provide improved arrangement and method designated to reduce or eliminate propagating buckles in underwater pipelines and at the same time to reduce or eliminate bursting of pipelines in the area of welds or other joints.

According to the invention an outer cover having high compressive and impact strength and high abrasion resistance is secured about an inner cover having high tensile strength.

According to the invention there is also a method as disclosed in claim 7.

The two component cover which includes outwardly preferably a polymer-concrete formulation covering and inwardly preferably a fiber-reinforced resin covering achieves synergistic results. The fiber-reinforced layer acts as the corrosion coating and provides additional hoop strength and bonds well to the steel pipe. The polymer concrete cover acts as a joint fill material and provides the compressive strength and acts to increase the moment of inertia, thus providing more ring stiffness. This effectively reduces the D/T (diameter to wall thickness ratio) of the pipe at the joint and increases the buckle propagation pressure. Further the arrestor of this kind in a simple manner can be assembled, because the polymer-concrete cover is outwardly and the resin cover is inwardly.

Preferred embodiments are characterized in the subclaims. Below an embodiment of an inventiv arrestor is descripted with regard to the drawing.

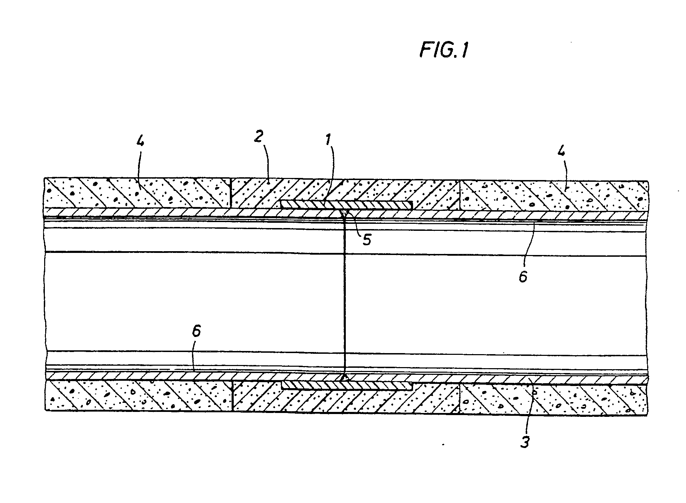

Figure 1 provides a cross sectional view showing the buckle arrestor or preventor of the present invention.

The buckle arrestors previously utilized for off-shire pipelines have been heavy walled lengths of pipe whose inside diameter is slightly larger than the outside diameter of the pipeline, but whose wall thickness is greater than the pipeline. These arrestors may be friction-fitted over the pipeline, welded to the pipeline, grouted to the pipeline, etc.

Referring now to Figure 1, it will be seen that the present invention provides a new type of improved buckle arrestor which also is useful for preventing pipeline bursts, particularly in the area of welds or other joints. The composite buckle arrestor shown in Figure 1 is a combination of two composite materials which exhibit synergism and cooperate in a manner not obtained by the prior art. Wrapping 1 is a preimpregnated laminate material of a phenolic, melamine-formaldehyde, epoxy, silicone, polyester, triazine or polytetrafluorothylene resin, which is combined with either organic, inorganic or metallic fiber reinforcement. Preferably, the resin is a B-staged epoxy, and the fiber is glass when the resin is epoxy or polyester and paper, cotton or cellulose when the resin is phenolic. Joint fill 2 preferably is a polymer-concrete formulation, for example about 3—15% by weight acrylic, polyester, vinylester, epoxy or furan resins and about 81—97% by weight aggregate such as sand, gravel fly ash and/or organic, inorganic or metallic fibers, rubber, expanded mica, vermiculite or perlite. The two covers 1 and 2 may be electrically conductive for cathodic protection purposes.

Pipeline 3 may have a standard concrete weight coating 4 which is normally about 5 to 23 cm (2 to 9 inches) thick. A weld 5 joins the two pipe ends together (or the pipe ends can be joined by other means), and the covers 1 and 2 normally overlay this joining area and also serve to prevent the pipe from bursting at such joints. Normally, the pipe will have coating 6 such as epoxy of about 0.3 mm (12 mils.) thickness to prevent corrosion or coal tar enamel of about 8 mm (5/16-inch) thickness.

To prepare the first coating 1, the base steel pipe joint is heated to about 175°C to 260° (350 to 500°F) with an induction heater, the pre-impregnated laminate material is then wrapped around the joint, and the polymer-concrete fill material 2 is added between the concrete weight coatings 4.

It will be apparent that the buckling of a pipe results in both tensile and compressive stresses being induced in the pipe wall and the exterior pipe coating. The fiber reinforced layer 1 acts as the corrosion coating and provides additional hoop strength and bonds well to the steel pipe 3. The polymer-concrete cover 2 acts as a joint fill material and provides the compressive strength and acts to increase the moment of inertia, thus providing more ring stiffness. The bond strength of the pipeline corrosion coating to the preimpregnated laminate material 1 is also excellent.

## Claims

1. Arrestor for reducing or eliminating propagating buckle failure, bursts etc. in underwater pipelines built up of covering means (1, 2) with high compressive and tensile strength and secured to at least a portion of the outside of the pipeline (3) characterized in that an outer cover (2) having high compressive and impact strength and high abrasion resistance is secured about an inner cover (1) having high tensile strength.

2. Arrestor according claim 1, characterized in that the inner cover (1) is a resin cover, preferably a fiber-reinforced resin cover, whereby preferably the resin is a B-staged epoxy.

3. Arrestor according at least one forgoing claims, characterized in that outer cover (2) is formed by a polymer-concrete formulation.

4. Arrestor according to claim 3, characterized in that the concrete formulation of the outer covering (2) includes aggregate.

5. Arrestor according at least one forgoing claims, characterized in that the inner cover (1) is encapsulated by the further covering (2).

6. Arrestor according at least one forgoing claims, characterized by electrically conductivity of inner cover (1) and/or outer cover (2) for cathodic protection purposes.

7. Method for preventing a collapse from propagating along an underwater pipeline especially for making an arrestor according at least one of the forgoing claims, characterized by increasing the hoop strength of the pipeline (3) in at least one location by bonding a high tensile strength cover (1) thereto and increasing the moment of inertia of the pipeline (3) in the same location by encapsulating the high tensile strength cover (1) with a high compressive strength cover (2).

8. Method according claim 7, characterized in that the location of the covers (1 resp. 2) is where two pipes are joined together and the covers (1 resp. 2) reduce the likelihood of the pipelines (3) bursting threat.

**Patentansprüche**

1. Einrichtung zum zumindest weitgehenden Anhalten der Fortpflanzung von Einknickungen, Rohrbüchen usw. in Unterwasserrohrleitungen mit einer Umhüllung (1, 2), die eine hohe Druck- und Zugfestigkeit aufweist und zumindest an einem Abschnitt der Außenseite der Rohrleitung (3) befestigt ist, dadurch gekennzeichnet, daß ein äußerer Mantel (2) mit hoher Druck- und Schlagfestigkeit und hohem Korrosionswiderstand auf einem inneren Mantel (1) mit hoher Zugfestigkeit befestigt ist.

2. Einrichtung nach Anspruch 1, dadurch gekennzeichnet, daß der innere Mantel (1) aus Kunststoff, vorzugsweise glasfaserverstärktem Kunststoff, besteht, wobei als Kunststoff vorzugsweise ein Epoxydharz der B-Stufe Verwendung findet.

3. Einrichtung nach wenigstens einem der vorhergehenden Ansprüche, dadurch gekennzeichnet, daß der äußere Mantel (2) durch eine Polymer-Benton-Mischung gebildet wird.

4. Einrichtung nach Anspruch 3, dadurch gekennzeichnet, daß die Bentonmischung des äußeren Mantels (2) Aggregationsstoffe enthält.

5. Einrichtung nach wenigstens einem der vorhergehenden Ansprüche, dadurch gekennzeichnet, daß der innere Mantel (1) vom äußeren Mantel (2) eingeschlossen ist.

6. Einrichtung nach wenigstens einem der vorhergehenden Ansprüche, dadurch gekennzeichnet, daß der innere Mantel (1) und/oder der äußere Mantel (2) zum Zwecke eines kathodischen Schutzes elektrisch leitfähig sind.

7. Verfahren zur Verhinderung der Ausbreitung eines Bruchs entlang einer Unterwasserrohrleitung insbesondere zur Herstellung einer Einrichtung gemäß wenigstens einem der vorhergehenden Ansprüche, dadurch gekennzeichnet, daß die Umfangsgestigkeit der Rohrleitung (3) in mindestens einem Rohrleitungsabschnitt dadurch erhöht wird, daß die Rohrleitung (3) mit einem Mantel (1) mit hoher Zugfestigkeit umgeben wird und daß das Trägheitsmoment der Rohrleitung (3) im selben Bereich dadurch erhöht wird, daß der eine hohe Zugfestigkeit enthaltende Mantel (1) mittels eines eine hohe Druckfestigkeit enthaltenden Mantels (2) eingeschlossen wird.

8. Verfahren nach Anspruch 7, dadruch gekennzeichnet, daß die Mäntel (1 bzw. 2) zur Reduzierung der Bruchwahrscheinlichkeit der Rohrleitung (3) im Bereich der Verbindung von zwei Rohren angeordnet werden.

**Revendications**

1. Dispostif d'arrêt pour réduire ou éliminer la propagation des défauts dus au flambage, à la rupture etc., des pipe-lines sous-marins, composé de moyens de recouvrement (1, 2) ayant une haute résistance à la compression et à la traction et attachés à au moins une partie de l'extérieur du pipe-line (3) caractérisé en ce que l'enveloppe extérieure (2) ayant une haute résistance à la compression et à l'impact et une haute résistance à l'abrasion est attachée autour de l'enveloppe intérieure (1) ayant une haute résistance à la traction.

2. Un dispositif d'arrêt selon la revendication 1, caractérisé en ce que l'enveloppe intérieure (1) est une enveloppe en résine, de préférence une enveloppe en résine renforcée de fibres ou de préférence la résine est une époxy-de-B.

3. Un dispositif d'arrêt selon au moins une des revendications précéentes caractérisé en ce que l'enveloppe extérieure (2) est formée par une composition de béton de polymérisation.

4. Un dispositif d'arrêt, selon la revendication 3, caractérisé en ce que la composition du béton de l'enveloppe extérieure (2) comprend des agrégats.

5. Un dispositif d'arrêt, selon au moins une des revendications précédentes caractérisé en ce que l'enveloppe intérieure (1) est enveloppée par un revêtement supplémentaire (2).

6. Un dispositif d'arrêt, selon au moins une des revendications précédentes caractérisé par une conductibilité électrique de l'enveloppe intérieure (1) et/ou de l'enveloppe extérieure (2) afin d'obtenir une protection cathodique.

7. Une méthode pour empêcher un flambage de se propager le long d'un pipe-line sous-marin en particulier pour réaliser un dispositif d'arrêt selon au moins l'une des revendications précédentes caractérisé par une augmentation de la force de cerclage du pipe-line (3) en au moins un endroit par l'attachement d'une enveloppe (1) à haute résistance à la rupture au pipe-line et en augmentant le moment d'inertie du pipe-line (3) au même endroit par l'enveloppement du revêtement (1) à haute résistance à la rupture d'une enveloppe à haute résistance à la compression (2).

8. Une méthode selon la revendication 7, caractérisée en ce que l'endroit des enveloppes (1 respectivement 2), est là les deux tubes sont liés ensembles et les enveloppent (1 respectivement 2) reduisent la probabilité du danger d'éclatement des pipe-lines (3).

## FIG.1